# EUROPÄISCHE PATENTSCHRIFT

(11) **EP 0 548 115 B1**
(45) Veröffentlichungstag und Bekanntmachung des Hinweises auf die Patenterteilung: **27.07.1994**
(21) Anmeldenummer: 91915479.9
(22) Anmeldetag: 04.09.1991
(51) Int. Cl.: A22C 17/04, B01D 36/02

(54) **VORRICHTUNG ZUR GEWINNUNG NAHRHAFTER SUBSTANZEN DURCH AUSLAUGUNG AUS KNOCHEN UND GEGEBENENFALLS DARAN ANHAFTENDEM FLEISCH**
DEVICE FOR OBTAINING NOURISHING SUBSTANCES BY EXTRACTION FROM BONES AND, WHERE APPROPRIATE, MEAT ADHERING THERETO
DISPOSITIF POUR L'OBTENTION DE SUBSTANCES NUTRITIVES PAR EXTRACTION A PARTIR D'OS ET, EVENTUELLEMENT, DE LA VIANDE Y ADHERANT

(30) Priorität: 12.09.1990 AT 1852/90
(43) Veröffentlichungstag der Anmeldung: 30.06.1993
(73) Patentinhaber: Inject Star Pökelmaschinen Gesellschaft m.b.H., A-1201 Wien (AT)
(72) Erfinder: PROSENBAUER, Otto, A-1201 Wien (AT)
(74) Vertreter: Wildhack, Helmut, Dipl.-Ing. Dr.
(86) Internationale Anmeldenummer: AT9100100
(87) Internationale Veröffentlichungsnummer: WO9203930

(56) Entgegenhaltungen:
- EP-A- 127 608
- EP-A- 274 997
- AT-B- 374 092
- DE-A- 2 157 850
- DE-A- 2 630 325
- DE-B- 1 077 558
- DE-C- 220 378
- FR-A- 2 189 098
- FR-A- 2 202 925
- FR-A- 2 330 323
- GB-A- 1 162 166
- US-A- 3 580 725
- US-A- 3 734 000

## Beschreibung

Die Erfindung bezieht sich auf eine Vorrichtung zur Gewinnung nahrhafter Substanzen durch Auslaugung aus Knochen und gegebenenfalls daran anhaftendem Fleisch, mit einem Behälter zur Aufnahme der Knochen und der zur Auslaugung dienenden Flüssigkeit, vorzugsweise Wasser, in welchem Behälter zumindest ein umlaufendes Rührorgan vorgesehen ist, wobei der Behälter um eine horizontale Achse so kippbar ist, daß sein Inhalt auf ein Grobsieb zur Abtrennung der Knochen und der Grobbestandteile von der Flüssigkeit und den Feinbestandteilen gelangt.

Bekanntlich enthalten die bei der manuellen Zerlegung von Schlachtieren anfallenden Knochen neben anhaftendem Gewebe und Fleischresten auch einen beachtlichen Gehalt an hochwertigen nahrhaften Substanzen. Zu ihrer Gewinnung wurde bereits eine Vorrichtung der eingangs geschilderten Art vorgeschlagen (AT-B 374 092), bei welcher die unzerkleinerten Knochen in Wasser unter Rühren und gegebenenfalls auch Schlagen im Behälter ausgelaugt werden, worauf der Behälterinhalt auf ein Sieb gekippt wird, unter welchem die flüssigen und feinteiligen Bestandteile aufgefangen werden. Die die Knochen enthaltende Rückstandmasse wird vom Sieb in einen Preßzylinder geführt und zur Gewinnung von Restflüssigkeit verpreßt. Damit läßt sich bereits ein hoher Anteil der in bzw. an den Knochen befindlichen nahrhaften Substanzen gewinnen, jedoch ist die Trennung der flüssigen Bestandteile von den Restbestandteilen zu grob. Wird nämlich das Sieb zu fein gemacht, so gelangen zu große Anteile nützlicher Substanzen in den Preßraum, aus welchem sie nur unvollständig wieder gewonnen werden können. Wird das Sieb hingegen mit verhältnismäßig großen Durchtrittsöffnungen ausgebildet, so läßt es feine Knochenteile oder Fasern hindurch, was zumeist unerwünscht ist.

Aus der DE-A 2 157 850 ist es bekannt, nützliche Substanzen aus Knochen und daran anhaftendem Fleisch dadurch zu gewinnen, daß das Ausgangsmaterial unter Kühlung zerkleinert und mit Wasser oder Eis vermischt wird, worauf die entstandene Suspension durch Zentrifugieren in eine feste Phase und eine flüssige Phase zerlegt wird. Diese Vorgangsweise setzt einen großen apparativen Aufwand voraus und hat den Nachteil, daß beim Zentrifugieren eine erhebliche Erwärmung auftritt, welche durch Zufuhr zusätzlicher Kühlmittel kompensiert werden muß.

Aus der DE-A 1,077.558 ist eine Vorrichtung zur Gewinnung der an ausgekochten Knochen verbliebenen Fleischreste bekannt, bei welcher das zu behandelnde Gut in eine rotierende Hohltrommel eingebracht wird, die an ihrem Umfang mit Schlitzen versehen ist. Im Inneren der Trommel schaben am Trommelmantel befestigte Messer das Fleisch von den Knochen ab. Durch zugeführtes siedendes Wasser werden die Fleischstückchen durch die Schlitze der Trommel geführt und fallen in eine Sammelrinne, aus der sie in geneigte Wannen gelangen. In diesen Wannen wird das Fett gelöst und es können sich die mitgeführten Knochensplitter absetzen. Aus den Wannen wird das die Fleischstückchen führende Wasser durch Becherräder in einen höher gelegenen Sammelkanal gefördert, der die Fleischstücke zu einem Behälter führt, in welchem ein Abstreifer das auf dem Wasser schwimmende Fett entfernt. Mittels eines weiteren Schaufelrades werden die Fleischstücke auf eine Rutsche gebracht, von wo sie auf ein Sieb zur Abtrennung des mitgeführten Wassers gelangen. Diese Vorrichtung bedingt einen erheblichen Aufwand und erfordert Betriebsunterbrechungen, wenn das Sieb, die Rinnen oder die Wannen gereinigt werden müssen.

Schließlich ist aus der GP-A 1,162.166 eine Vorrichtung bekannt, bei welcher gebrochene Knochen samt den daran anhaftenden Fleischstückchen durch einen Förderer von oben auf eine Siebtrommel aufgebracht werden. Die den Siebmantel durchsetzenden Bestandteile werden von einem Rohr aufgefangen und einer weiteren Siebtrommel von oben zugeführt. Da das zugeführte Gut nur kurzzeitig die Möglichkeit hat, die Öffnungen der Siebtrommel zu durchsetzen, findet eine nur unvollkommene Gewinnung der nützlichen Bestandteile statt.

Die Erfindung geht von der zuerst beschriebenen bekannten Vorrichtung aus und setzt sich zur Aufgabe, diese Vorrichtung noch weiter zu verbessern und den erwähnten Nachteil der groben Trennung zu vermeiden, wobei Betriebsstörungen vermieden werden sollen. Die Erfindung löst die Aufgabe - ausgehend von der eingangs geschilderten Vorrichtung - dadurch, daß das Grobsieb in einer Wanne angeordnet ist, von der ein Auslauf zu einem weiteren, von einer umlaufenden Siebwalze gebildeten Sieb führt, das zur Drehbewegung um eine horizontale Achse angetrieben ist und dessen Sieböffnungen kleiner sind als jene des Grobsiebes, wobei an dieser Siebwalze eine das aus dem Auslauf austretende Produkt aufnehmende Zulaufwanne an der Auflaufseite und zumindest ein Abstreifer zur Entfernung der Rückstände an der anderen Seite anliegen und wobei die Zulaufwanne und bzw. oder der Abstreifer durch Federn gegen die Siebwalze gedrückt sind, und daß unterhalb des umlaufenden Siebes ein Auffangbehälter für die Flüssigkeit angeordnet ist, von dem eine Abfuhrleitung wegführt. Dadurch wird eine feinere Trennung der die nützlichen Substanzen enthaltenden Lauge von den Knochen erzielt, ohne daß es durch Verlegung des feineren Siebes zu einer Betriebsstörung kommen kann, denn der Abstreifer sorgt für eine ständige Reinigung des umlaufenden Siebes, so daß fortlaufend neue, gereinigte Siebpartien für den Trennvorgang zur Verfügung stehen. Die Zulaufwanne bewirkt einerseits eine Abdichtung zwischen ihr selbst und der Siebwalze, so daß kein in die Zulaufwanne zugeführtes Produkt an der Siebwalze vorbeiströmen kann. Anderseits wirkt die an der Siebwalze anliegende Kante der Zulaufwanne auch als weiterer Abstreifer für solche Feststoffanteile, welche gegebenenfalls den auf der anderen Seite der Siebwalze liegenden Abstreifer passiert haben. Die Anordnung der Zulaufwanne an der auflaufenden Seite der Siebwalze begünstigt die Dichtung und hat den Vorteil, daß das zulaufende Produkt von der rotierenden Siebwalze nach oben mitgenommen wird, so daß das Produkt verhältnismäßig lange Zeit hat, durch die Öffnungen der Siebwalze hindurchzutreten, bevor es zum Abstreifer gelangt, welcher an der absteigenden Seite der Siebwalze angeordnet ist. Die Andrückung der Zulaufwanne bzw. des Abstreifers mittels Federn an die Siebwalze begünstigt die Abdichtung. Im Rahmen der Erfindung ist es hiebei zur Vermeidung großer Abnützungen und zur Geräuschdämpfung zweckmäßig, wenn die Zulaufwanne und bzw. oder der Astreifer mit Schleifdichtflächen aus Kunststoff am Mantel der Siebwalze anliegen. Ferner ist es im Rahmen der Erfindung zweckmäßig, die Siebwalze an ihren beiden Stirnrändern mit radial abstehenden Flanschen zu versehen, um zu vermeiden, daß die Lauge an den Stirnrändern von der Siebwalze abrinnen kann.

Gemäß einer Weiterbildung der Erfindung ist im Auffangbehälter unterhalb des umlaufenden Siebes ein, vorzugsweise in den Auffangbehälter einhängbares, Feinfilter angeordnet, dessen Sieböffnungen kleiner sind als jene des umlaufenden Siebes. Dadurch läßt sich eine nochmalige Feintrennung erzielen, wenn dies gewünscht ist, z.B. zur Abtrennung sehr feiner Knochensplitter od.dgl. Um zu vermeiden, daß gegebenenfalls in den Auffangbehälter gelangte gröbere Bestandteile in das Endprodukt gelangen und dort hinsichtlich der Qualität bzw. für die Weiterverarbeitung stören, empfiehlt es sich, im Auffangbehälter ein die Einlaßöffnung der Abfuhrleitung umgebendes zusätzliches Filter, vorzugsweise ein Saugfilter, vorzusehen.

Gemäß einer bevorzugten Weiterbildung der Erfindung ist die das Grobsieb aufnehmende Wanne auf einem Fahrgestell gelagert, das von dem den Behälter tragenden Gestell trennbar ist und das einen Hohlraum begrenzt, in den ein den Auffangbehälter und das umlaufende Sieb tragendes weiteres Fahrgestell einschiebbar ist. Sowohl die das Grobsieb aufnehmende Wanne als auch den Auffangbehälter samt dem umlaufenden Sieb sind dann von der restlichen Vorrichtung trennbar und gegebenenfalls gesondert verwendbar. Außerdem erleichtert dies die Unterbringung bei Nichtgebrauch.

Zweckmäßig ist die das Grobsieb tragende Wanne um eine horizontale Achse in eine Entleerstellung kippbar, vorzugsweise mittels eines einen Hydraulikzylinder aufweisenden hydraulischen Aggregates. Dies ermöglicht es, die in der Wanne zurückbleibenden Knochen durch Kippung der Wanne aus dieser zu entleeren, so daß händische Arbeit hiefür eingespart wird. Die Verwendung eines hydraulischen Aggregates für diese Kippung empfiehlt sich insbesondere bei größeren Vorrichtungen. Zweckmäßig liegt erfindungsgemäß die Achse, um welche die Wanne kippbar ist, und die Welle, mittels welcher der Behälter kippbar ist, zueinander parallel und es ist die Wanne vom Behälter weg in die Entleerstellung kippbar. Dies erleichtert das Heranfahren eines Wagens zur Aufnahme der ausgelaugten Knochen.

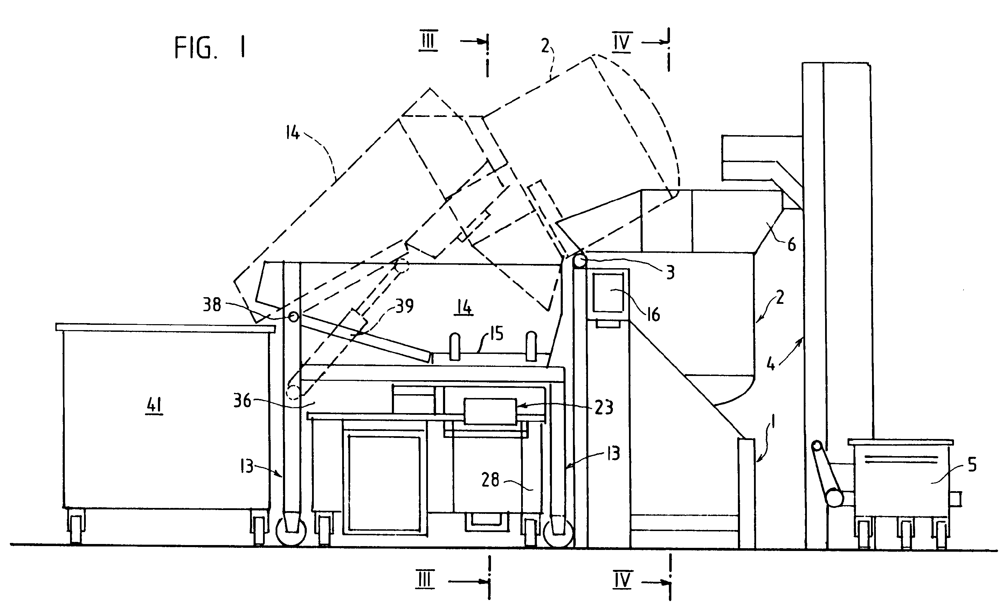

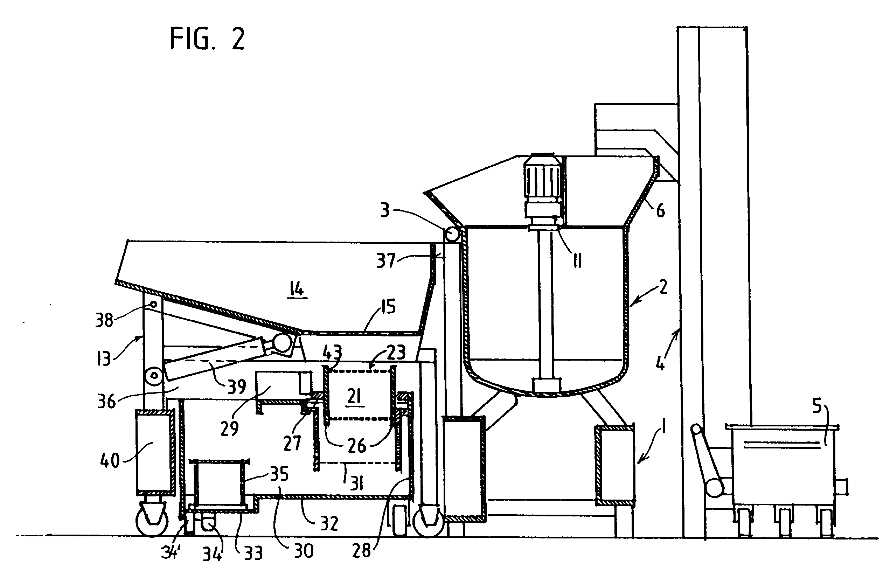

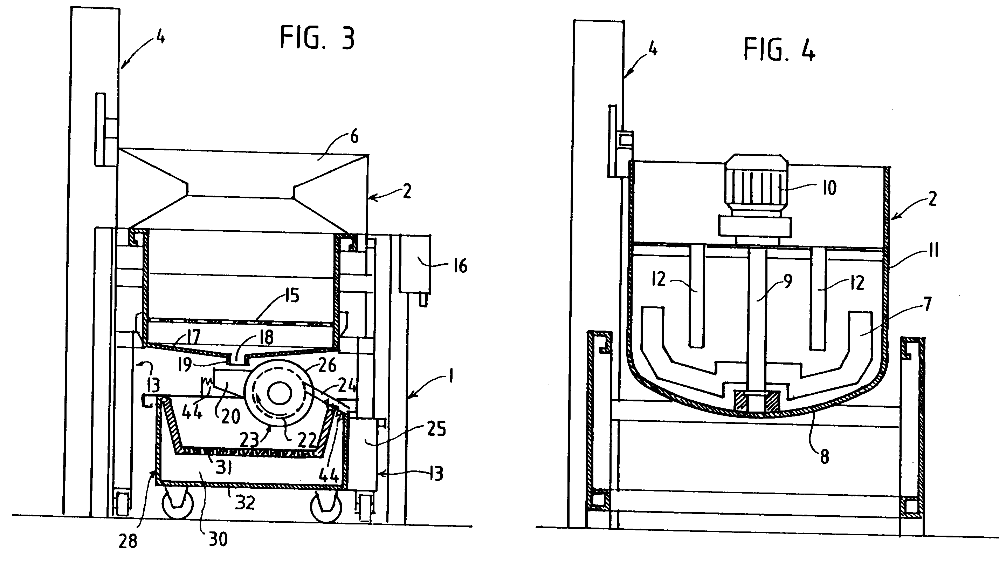

In der Zeichnung ist die erfindungsgemäße Vorrichtung anhand eines Ausführungsbeispieles schematisch dargestellt. Fig.1 zeigt eine Seitenansicht der Vorrichtung. Fig.2 ist ein Längsschnitt durch dieselbe. Die Fig.3 und 4 zeigen Querschnitte nach den Linien III-III bzw. IV-IV der Fig.1.

Die Vorrichtung hat ein ortsfestes Gestell 1, welches einen Behälter 2 trägt, der im Gestell 1 mittels einer horizontalen Welle 3 schwenkbar gelagert ist. Der Behälter 2 dient zur Aufnahme der, gegebenenfalls fleischbehafteten Knochen und einer zur Auslaugung der nahrhaften Substanzen daraus dienenden Flüssigkeit, insbesondere Wasser, vorzugsweise mit einem Zusatz von Eis. Zur Einbringung dieser Ausgangsprodukte in den Behälter 2 ist ein Beschickungslift 4 an der Frontseite des Gestelles 1 angeordnet, in welchem Lift ein Transportwagen 5 für die Knochen od.dgl. einhängbar ist. In der angehobenen Lage dieses Wagens 5 wird dieser vom Lift 4 so gekippt, daß der Wageninhalt in den oben offenen Behälter 2 fällt. Zur Erleichterung der Einfüllung ist am oberen Rand des Behälters 2 ein kegelstumpfförmiger Kragen 6 vorgesehen. Die in den Behälter 2 eingebrachten Substanzen können durch Rührarme 7 (Fig.4) umgerührt werden, die an einer am Boden 8 des Behälters 2 gelagerten Welle 9 befestigt sind. Die Welle 9 wird von einem Motor 10 angetrieben, der auf einem dem Behälter 2 quer durchsetzenden Träger 11 befestigt ist, welcher auch zwei in das Behälterinnere ragende Stangen 12 trägt, welche parallel zur Welle 9 angeordnet sind und nach Art von Schikanen zur Intensivierung des Rühreffektes dienen. An die dem Lift 4 abgewandte Seite des Gestelles 1 ist ein Fahrgestell 13 heranfahrbar, welches eine Wanne 14 trägt, in deren Boden ein Grobsieb 15 eingebaut ist. In diese Wanne 14 kann der Inhalt des Behälters 2 eingeleert werden, wofür der Behälter 2 mittels der Welle 3 aus der in den Fig.1 und 2 dargestellten Einfüll- und Rührstellung in die in Fig.1 strichliert dargestellte Entleerstellung kippbar ist. Zur hiefür erforderlichen Verdrehung der Welle 3 dient ein mit einem Hydraulikzylinder ausgestattetes, nicht dargestelltes hydraulisches Aggregat, welches von einem Schaltkasten 16 elektronisch betätigt werden kann. Statt des hydraulischen Aggregates kann, falls gewünscht, die Verdrehung der Welle 3 auch mittels eines Elektromotors mit Getriebe durchgeführt werden. Der Kragen 6 ist - mit verringerter Höhe - auch an der dem Lift 4 abgewendeten Seite des Behälters 2 vorgesehen und dient dort zur Erleichterung des Ausgießens des Behälterinhaltes.

Das Grobsieb 15 ist in der Wanne 14 zweckmäßig auswechselbar angeordnet. Der unterhalb des Grobsiebes 15 liegende Boden 17 ist zu einem Auslauf 18 geneigt, welcher zweiteilig ausgebildet ist und zwar als ein die Auslauföffnung des Bodens 17 umgebender trichterartiger Ring 19, unter welchem eine einseitig offene Zulaufwanne 20 liegt, deren Bodenwand an der offenen Seite der Wanne 20 eng an der Siebfläche 21 eines als Siebwalze 22 ausgebildeten umlaufenden Siebes 23 seitlich anliegt und daran dichtend schleift. An der gegenüberliegenden Seite liegt an der Siebfläche 21 der Siebwalze 22 ein von einem Blech gebildeter Abstreifer 24 schleifend an, welcher die vom umlaufenden Sieb 23 zurückgehaltenen Rückstände in einen Trog 25 führt. Die Siebwalze 22 ist zur Drehbewegung um eine horizontale Achse angetrieben und hat hiezu zwei die Siebfläche 21 berandende Stirnplatten 26, die mit Achsstummeln 27 versehen sind, die in Lagern eines weiteren Fahrgestelles 28 gelagert und durch einen Motor 29 mit Regelgetriebe angetrieben sind. Zur Verbesserung der Abdichtung zwischen der Zulaufwanne 20 bzw. dem Abstreifer 24 und der Siebfläche 21 sind die Zulaufwanne 20 und der Abstreifer 24 jeweils durch Federn 44 gegen die Siebfläche 21 gedrückt. Eine weitere Verbesserung der Abdichtung, eine Verringerung der Abnützung und eine Geräuschdämpfung wird dadurch erzielt, daß die an der Siebfläche 21 anliegenden Kanten der Zulaufwanne 20 bzw. des Abstreifers 24 mit Kunststoff-Schleifdichtflächen ausgebildet sind. Dadurch wird erreicht, daß das über die Zulaufwanne 20 zugeführte Produkt im wesentlichen verlustfrei durch das umlaufende Sieb 23 geführt wird. Unterhalb des umlaufenden Siebes 23 ist im Fahrgestell 28, welches auch die Zulaufwanne 20 trägt, ein Auffangbehälter 30 ausgebildet, in welchem unterhalb des umlaufenden Siebes 23 ein Feinfilter 31 eingehängt ist, dessen Sieböffnungen kleiner sind als jene des umlaufenden Siebes 23, dessen Sieböffnungen wiederum kleiner sind als jene des Grobsiebes 15. Durch diese Abstufung der Sieblochdurchmesser wird eine fraktionsweise Trennung möglich. Der Boden 32 des Auffangbehälters 30 ist mit einer Vertiefung 33 versehen, von der eine Abfuhrleitung 34 wegführt, in die eine Saugpumpe 34′ eingebaut ist. Die Einlaßöffnung dieser Abfuhrleitung 34 ist von einem zusätzlichen, als Saugfilter ausgebildeten Filter 35 umgeben. Das Fahrgestell 28, welches den Auffangbehälter 30 und das umlaufende Sieb 23 samt seinem Motor 29 trägt, ist in einen Hohlraum 36 des die Wanne 14 tragenden Fahrgestelles 13 einschiebbar und in der Sollage durch nicht dargestellte Arretierungen fixierbar, so daß die Wanne 20 stets unterhalb des Ringes 19 des Auslaufes 18 gehalten wird. In ähnlicher Weise ist das Fahrgestell 13 am Gestell 1 mittels Fixierorganen 37, z.B. Haken und Ösen, in der Sollage fixierbar.

Die Wanne 14 ist am Fahrgestell 13 um eine horizontale Achse 3S zwischen einer horizontalen Ruhestellung, die in den Fig.1 und 2 mit vollen Linien dargestellt ist, und einer in Fig.1 strichliert dargestellten Entleerstellung kippbar. Hiezu dient ein am Fahrgestell 13 sowie am Boden der Wanne 14 angelenktes hydraulisches Aggregat 39. Die hydraulischen Steuergeräte sowie die Hydraulikpumpe und die elektrischen Steuergeräte sind zweckmäßig in einem gemeinsamen Kasten 40 (Fig.2) untergebracht, und zwar an dem dem Lift 4 abgewendeten Ende des Fahrgestelles 13, um den Kasten 40 leicht zugänglich zu halten. Nach dieser Seite ist auch die Wanne 14 kippbar, so daß ihr Inhalt in eine an das erwähnte Stirnende des Fahrgestelles 13 herangeschobenen Transportwagen 41 entleert werden kann. Die beiden Kippachsen 3,38 liegen zweckmäßig zueinander parallel.

Im Betrieb werden die Frischfleischknochen mit dem Wagen 5 herangefahren, mittels des Liftes 4 angehoben und aus dem Wagen 5 in den Behälter 2 gekippt, der sich in der in den Fig.1 und 2 mit vollen Linien gezeichneten Rührstellung befindet. Zugleich wird Wasser und Eis zugegeben und der Inhalt des Behälters 2 mittels der Rührarme 7 intensiv gerührt, vorzugsweise in Intervallen. Die Drehzahl des Rührwerkes ist einstellbar, gegen Schluß der Rührzeit wird die Drehzahl zweckmäßig verlangsamt, damit sich das Fett an der Oberfläche des Behälterinhaltes sammeln kann. Gegebenenfalls kann auch, bevor der Behälter 2 gekippt wird, eine Stillstandszeit gewählt werden. Wird das auf dem Behälterinhalt schwimmende Fett für die weitere Verarbeitung nicht gewünscht, so wird der Behälter 2 nur so weit gekippt, daß die obenschwimmende Fettschicht in die Wanne 14 abfließt. Das Fett gelangt dann durch das Grobsieb 15 auf das rotierende Sieb 23, von welchem es mitgenommen und über den von einem Blech gebildeten Abstreifer 24 in den Trog 25 abgeführt wird.

Nach der gegebenenfalls vorgenommenen Abfuhr der Fettschicht wird der Behälter 2 gekippt, so daß sein Inhalt in die Wanne 14 gelangt. Der Behälter 2 nimmt hiebei die in Fig.1 strichliert dargestellte Entleerstellung ein. Dieses Kippen erfolgt vorsichtig bzw. intervallmäßig, um einen Schwall auf das rotierende Sieb 23 zu vermeiden. Das Grobsieb 15 trennt die Knochen und groben Bestandteile von der Flüssigkeit und den Feinbestandteilen ab, welche durch das Grobsieb 15 hindurchtreten und durch den Auslauf 18 bzw. die Zulaufwanne 20 seitlich an das rotierende Sieb 23 herangeführt werden. Radial über den Mantel 21 der Siebwalze 22 vorstehende Flansche 43 verhindern ein Abrinnen der aufgebrachten Masse. Das in Richtung des Pfeiles 42 (Fig.3) umlaufende Sieb 23 nimmt die aufgebrachte Masse etwas mit, die feinen und flüssigen Bestandteile treten durch die Öffnungen des Mantels 21 des Siebes 23 hindurch und gelangen zum Feinfilter 31. Die auf das rotierende Sieb 23 aufgebrachten gröberen Bestandteile werden mittels des Abstreifers 24 vom Mantel 21 abgestreift und in den Trog 25 geleitet. Mittels des Feinsiebes 31 erfolgt nochmals eine Fraktionierung, so daß nur eine sehr feine Feststoffanteile enthaltende Flüssigkeit in den Auffangbehälter 30 gelangt und mittels der Abfuhrleitung 34 abgepumpt wird. Diese Flüssigkeit ist eine fleischfarbene, fleischsossenartige Suppe, deren Temperatur durch Thermostaten im Auffangbehälter 30 laufend überwacht werden kann. Es ist zweckmäßig, diese Temperatur möglichst niedrig zu halten und die gewonnene Suppe in Blöcken oder in Flockeneisform einzufrieren. Dieses Produkt kann dann beim Kuttern den jeweiligen Brätsorten anstatt Wasser und Eis zugesetzt werden, wodurch es möglich wird, bis zu 10% Verarbeitungsfleisch beim Kuttern einzusparen. Auch für die Herstellung anderer Fleischprodukte, Sossen oder Suppen ist das gewonnene Produkt gut zu verwenden, zumal es außer den Restfleischmengen auch die aus den Knochen ausgelaugten Bestandteile, wie Liquid-Proteine (natürliches Flüssig-Eiweiß), feine Fleischfasermassen, Kollagen (Bindegewebsleim), Gelatineanteile und andere wertvolle Substanzen enthält.

Die Bedienung der Anlage ist einfach, sie kann durch eine einzige Bedienungsperson durchgeführt werden. Es ist möglich, alle Arbeitszyklen und Intervalle nach einem frei programmierbaren Programm über einen Computer exakt zu steuern und derart das Dekantieren, Abklären, Abgießen, Filtern und Abpumpen des gewonnenen Produktes weitgehend zu automatisieren. Die gesonderten Fahrgestelle 13,28 ergeben im ineinandergeschobenen Zustand einen geringen Platzbedarf der kompakt gebauten Anlage. Zugleich ergibt sich der Vorteil, einzelne Bauteile der Anlage, etwa die Wanne 14 oder den Auffangbehälter 30 auch andersartig verwenden zu können, z.B. die Wanne 14 nach Abdeckung des Grobsiebes 15 als Transportbehälter für Fleisch, oder den Auffangbehälter 30 als Behälter für Lake od.dgl. usw. Auch eine gesonderte Verwendung des rotierenden Siebes 23 für Sonderzwecke ist möglich.

Im Behälter 2 können gegebenenfalls zusätzlich zu den Rührarmen 7 auch Schlagorgane vorgesehen sein, um im vom Behälter 2 gebildeten Flüssigaufbereiter die im Wasser schwimmenden Frisch-Fleisch-Knochen noch durch Schlageffekte behandeln zu können.

Die Lochdurchmesser der einzelnen Siebe betragen für das Grobfilter etwa 4 mm Öffnungsweite, für das umlaufende Sieb 23 etwa 1 mm, für das Feinfilter 31 etwa 0,4 mm und für das Saugfilter 35 etwa 1 mm. Da alle diese Filter jedoch leicht auswechselbar sind, ist es leicht möglich, von einem bestimmten Öffnungsprogramm auf ein anderes Programm überzugehen.

## Patentansprüche

1. Vorrichtung zur Gewinnung nahrhafter Substanzen durch Auslaugung aus Knochen und gegebenenfalls daran anhaftendem Fleisch, mit einem Behälter zur Aufnahme der Knochen und der zur Auslaugung dienenden Flüssigkeit, vorzugsweise Wasser, in welchem Behälter zumindest ein umlaufendes Rührorgan vorgesehen ist, wobei der Behälter um eine horizontale Achse so kippbar ist, daß sein Inhalt auf ein Grobsieb zur Abtrennung der Knochen und der Grobbestandteile von der Flüssigkeit und den Feinbestandteilen gelangt, dadurch gekennzeichnet, daß das Grobsieb (15) in einer Wanne (14) angeordnet ist, von der ein Auslauf (18) zu einem weiteren, von einer umlaufenden Siebwalze (22) gebildeten Sieb (23) führt, das zur Drehbewegung um eine horizontale Achse (27) angetrieben ist und dessen Sieböffnungen kleiner sind als jene des Grobsiebes (15), wobei an dieser Siebwalze (22) eine das aus dem Auslauf (18) austretende Produkt aufnehmende Zulaufwanne (20) an der Auflaufseite und zumindest ein Abstreifer (24) zur Entfernung der Rückstände an der anderen Seite anliegen, und wobei die Zulaufwanne (20) und oder der Abstreifer (24) durch Federn (44) gegen die Siebwalze (22) gedrückt sind, und daß unterhalb des umlaufenden Siebes (23) ein Auffangbehälter (30) für die Flüssigkeit angeordnet ist, von dem eine Abfuhrleitung (34) wegführt.

2. Vorrichtung nach Anspruch 1, dadurch gekennzeichnet, daß die Zulaufwanne (20) und bzw. oder der Abstreifer (24) mit Schleifdichtflächen aus Kunststoff an der Siebfläche (21) der Siebwalze (22) anliegen.

3. Vorrichtung nach Anspruch 1 oder 2, dadurch gekennzeichnet, daß die Siebwalze (22) an ihren beiden Stirnrändern mit radial abstehenden Flanschen (42) versehen ist.

4. Vorrichtung nach einem der Ansprüche 1 bis 3, dadurch gekennzeichnet, daß im Auffangbehälter (30) unterhalb des umlaufenden Siebes (23) ein, vorzugsweise in den Auffangbehälter (30) einhängbares, Feinfilter (31) angeordnet ist, dessen Sieböffnungen kleiner sind als jene des umlaufenden Siebes (23).

5. Vorrichtung nach Anspruch 4, dadurch gekennzeichnet, daß im Auffangbehälter (30) ein die Einlaßöffnung der, vorzugsweise mit einer Pumpe versehenen, Abfuhrleitung (34) umgebendes zusätzliches Filter (35) vorzugsweise ein Saugfilter, vorgesehen ist.

6. Vorrichtung nach einem der Ansprüche 1 bis 5, dadurch gekennzeichnet, daß die das Grobsieb (15) aufnehmende Wanne (14) auf einem Fahrgestell (13) gelagert ist, das vom den Behälter (2) tragenden Gestell (1) trennbar ist und das einen Hohlraum (36) begrenzt, in den ein den Auffangbehälter (30) und das umlaufende Sieb (23) tragendes weiteres Fahrgestell (28) einschiebbar ist.

7. Vorrichtung nach einem der Ansprüche 1 bis 6, dadurch gekennzeichnet, daß die das Grobsieb (15) tragende Wanne (14) um eine horizontale Achse (38) in eine Entleerstellung kippbar ist, vorzugsweise mittels eines hydraulischen Aggregates (39).

8. Vorrichtung nach Anspruch 7, dadurch gekennzeichnet, daß die Achse (38), um welche die Wanne (14) kippbar ist, und die Welle (3), um welche der Behälter (2) kippbar ist, zueinander parallel liegen und die Wanne (14) vom Behälter (2) weg in die Entleerstellung kippbar ist.

## Claims

1. A device for obtaining nourishing substances by extraction from bones and, where appropriate, meat adhering thereto, having a container to hold the bones and the liquid, preferably water, used for extraction, the interior of said container being provided with at least one rotating stirring mechanism and the container being tiltable about a horizontal pivot pin so that its contents are delivered onto a coarse sieve to separate the bones and the coarse constituents from the liquid and the fine constituents, characterised in that the coarse sieve (15) is positioned in a trough (14) from which a funnel (18) leads to a further sieve (23) which is formed by a rotating sieve roller (22), is driven to produce rotary movement about a horizontal pivot pin (27) and has mesh openings smaller than those of the coarse sieve (15), this sieve roller (22) being abutted on the collection side by an inlet trough (20) receiving the product emerging from the funnel (18) and on the other side by at least one scraper (24) to remove the residues, the inlet trough (20) and/or the scraper (24) being pressed against the sieve roller (22) by springs (44), and in that positioned below the rotating sieve (23) is a collecting container (30) for the liquid, from which a discharge duct (34) leads away.

2. A device as claimed in Claim 1, characterised in that the inlet trough (20) and/or the scraper (24) abut the sieve face (21) of the sieve roller (22) with abrasive sealing faces made of plastics.

3. A device as claimed in Claim 1 or Claim 2, characterised in that the sieve roller (22) is provided with radially projecting flanges (42) on its two front rims.

4. A device as claimed in one of Claims 1 to 3, characterised in that in the collecting container (30) below the rotating sieve (23) there is a fine filter (31), which is preferably suspensible in the collecting container (30) and whose mesh openings are smaller than those of the rotating sieve (23).

5. A device as claimed in Claim 4, characterised in that in the collecting container (30) there is an additional filter (35), preferably a suction filter, which surrounds the inlet of the discharge duct (34), which duct is preferably provided with a pump.

6. A device as claimed in one of Claims 1 to 5, characterised in that the trough (14) holding the coarse sieve (15) is supported on a travelling device (13) which is separable from the stand (1) holding the container (2) and which borders a hollow space (36) into which a further travelling device (28) holding the collecting container (30) and the rotating sieve (23) can be inserted.

7. A device as claimed in one of Claims 1 to 6, characterised in that the trough (14) holding the coarse sieve (15) is tiltable about a horizontal pivot pin (38) into an emptying position, preferably by means of an hydraulic mechanism (39).

8. A device as claimed in Claim 7, characterised in that the pivot pin (38) about which the trough (14) is tiltable and the shaft (3) about which the container (2) is tiltable lie parallel to each other and the trough (14) is tiltable away from the container (2) into the emptying position.

## Revendications

1. Dispositif pour extraire des substances nutritives par macération d'os et, éventuellement, de viande y adhérant, comprenant un récipient destiné à recevoir les os et le liquide servant à la macération, de l'eau de préférence, récipient dans lequel est prévu au moins un organe d'agitation tournant et que l'on peut faire basculer autour d'un axe horizontal de manière que son contenu parvienne sur un tamis grossier servant à séparer les os et les constituants grossiers du liquide et des constituants fins, caractérisé en ce que le tamis grossier (15) est disposé dans une cuve (14) d'où une sortie (18) mène à un autre tamis (23) formé par un cylindre perforé tournant (22) qui est entraîné en rotation autour d'un axe horizontal (27) et dont les ouvertures de tamis sont plus petites que celles du tamis grossier (15), avec application contre le côté arrivée de ce cylindre perforé (22) d'une cuve d'amenée (20) recevant le produit émergeant de la sortie (18) et avec application contre l'autre côté du cylindre perforé (22) d'au moins une racle (24) pour l'enlèvement des résidus, la cuve d'amenée (20) et/ou la racle (24) étant pressées par des ressorts (44) contre le cylindre perforé (22), et qu'un récipient collecteur (30) pour le liquide, d'où part une conduite d'évacuation (34), est placé sous le tamis tournant (23).

2. Dispositif selon la revendication 1, caractérisé en ce que la cuve d'amenée (20) et/ou la racle (24) s'appliquent contre la surface de tamisage (21) du cylindre perforé (22) par des surfaces frottantes d'étanchéité en matière plastique.

3. Dispositif selon la revendication 1 ou 2, caractérisé en ce que le cylindre perforé (22) est pourvu de rebords (42) dépassant radialement sur ses deux bords extrêmes.

4. Dispositif selon une des revendications 1 à 3, caractérisé en ce qu'un filtre fin (31), dont les ouvertures sont plus petites que celles du tamis tournant (23), est disposé sous le tamis tournant (23) dans le récipient collecteur (30), dans lequel ce filtre est de préférence suspendu.

5. Dispositif selon la revendication 4, caractérisé en ce qu'un filtre supplémentaire (35), de préférence un filtre d'aspiration, est prévu dans le récipient collecteur (30) autour de l'ouverture d'admission de la conduite d'évacuation (34), conduite qui est pourvue de préférence d'une pompe.

6. Dispositif selon une des revendications 1 à 5, caractérisé en ce que la cuve (14), recevant le tamis grossier (15), est placée sur un support roulant (13) qui est séparable du bâti (1) portant le récipient (2) et qui délimite un espace vide (36) dans lequel peut être introduit un autre support roulant (28) portant le récipient collecteur (30) et le tamis tournant (23).

7. Dispositif selon une des revendications 1 à 6, caractérisé en que la cuve (14), portant le tamis grossier (15), peut être amenée par basculement, autour d'un axe horizontal (38), de préférence au moyen d'un appareil hydraulique (39), à une position de vidage.

8. Dispositif selon la revendication 7, caractérisé en ce que l'axe (38) autour duquel peut basculer la cuve (14) et l'arbre (3) autour duquel peut basculer le récipient (2) sont parallèles et le basculement de la cuve (14) à la position de vidage s'effectue par un mouvement qui éloigne cette cuve du récipient (2).
